# EUROPEAN PATENT SPECIFICATION

(11) **EP 0 577 353 B1**
(45) Date of publication and mention of the grant of the patent: **16.10.1996**
(21) Application number: 93305005.6
(22) Date of filing: 25.06.1993
(51) Int. Cl.: A01B 15/00

(54) **Combined depth / transport wheel for reversible plough**
Pendelstütz- und Nachlaufrad für Drehpflüge
Roue de jauge et de transport pour charrue réversible

(30) Priority: 30.06.1992 GB 9213883
(43) Date of publication of application: 05.01.1994
(73) Proprietor: KVERNELAND KLEPP AS, N-4344 Kvernaland (NO)
(72) Inventor: Ognedal, Einar, N-4344 Kvernaland (NO); Torgrimsen, Tor, N-4018 Stavanger (NO)
(74) Representative: Orr, William McLean

(56) References cited:
- EP-A- 0 161 517
- EP-A- 0 252 591
- EP-A- 0 390 691
- DE-A- 3 033 791
- FR-A- 1 295 978
- FR-A- 2 400 824
- FR-A- 2 591 846
- US-A- 3 045 355

## Description

This invention relates to a reversible plough having coupling means at its forward end for coupling the plough to a rear lifting arrangement of a propelling vehicle (usually an agricultural tractor), a pivotally mounted plough frame carrying pairs of plough bodies arranged along the length of the frame, means for rotating the plough frame relative to the forward coupling means between right side and left side ploughing positions so as to bring one or the other of the plough bodies of each pair into a ploughing position, and a depth control wheel mounted on the plough frame and arranged to control the depth of ploughing by the plough bodies in the right or the left side ploughing positions.

Reversible ploughs have been available for many years, in the form of fully mounted and also semi-mounted ploughs, though the present invention is primarily concerned with a reversible plough of the fully mounted type i.e in which the major part of the load of the plough is borne by the usual lifting linkage at the rear of the propelling vehicle.

In a fully mounted plough, it is usual to provide a depth control wheel which supports the plough at or near its rear end, and in order to control the ploughing depth of the plough bodies in conjunction with appropriate adjustment of the height of the forward end of the plough by the lifting arrangement of the propelling vehicle.

Evidently, during each rotational adjustment of the plough frame between its two ploughing positions i.e. upon each reversal of the plough bodies, the mounting of the depth wheel on the plough frame must be of such a type as to permit such rotational movement, but also to enable the depth wheel to take-up again a required ground engaging position at the end of each rotational adjustment of the plough frame.

DE3033791, which discloses the features of the preamble of claim 1, discloses a supporting wheel for a rotatable plough in which a first axis is provided on a bracket supported by the plough frame, and a piece of tubing is mounted to the first axis. The wheel is attached to the tubing via a second axis, and the tubing is fixable in two positions relative to the bracket about the axis, the positions corresponding respectively to working and transport positions of the plough.

FR2591846 discloses a reversible plough in which a support wheel is carried on an eassembly rigidly attached to a bracket mounted to the plough frame.

EP0161517 disclosed a rotatable plough in which a wheel carrier is mounted to a bearing casing on the plough frame by means of first and second axes.

The present invention seeks to provide an improved form of mounting for the depth wheel on the plough frame which enables the depth wheel to be located in a forwardly extending position, or a rearwardly extending position, from its mounting on the plough frame as required by the operator, and also preferably to permit the depth wheel to function as a transport wheel when the plough frame is rotated to a transport position approximately mid-way between the right and left side ploughing positions.

According to the invention there is provided a reversible plough having coupling means at its forward end for coupling the plough to a rear lifting arrangement of a propelling vehicle, a pivotally mounted plough frame carrying pairs of plough bodies arranged along the length of the frame, means for rotating the plough frame relative to the forward coupling means between right side and left side ploughing positions so as to bring one or the other of the plough bodies of each pair into a ploughing position, and a depth control wheel mounted on the plough frame via a wheel mounting and arranged to control the depth of ploughing by the plough bodies in the right or the left side ploughing positions:
wherein the wheel mounting comprises:
a rigid mounting bracket secured to the plough frame and extending transversely of the frame, said bracket being rotatable with the plough frame during reversal of the plough bodies;
a first pivot arrangement carried by the bracket and defining a first pivot axis which extends generally upright in either ploughing position;
a second pivot arrangement connected to the first pivot arrangement and defining a second pivot axis extending substantially perpendicular to the first pivot axis;
an adjustable locking mechanism to lock the second pivot arrangement about the first pivot axis; and
a wheel carrier arm connected at one end to the second pivot arrangement and rotatably mounting the depth wheel at or near the opposite end of the arm;
whereby upon each rotational plough reversal movement of the plough frame, the depth wheel allows this movement by relative rotation of the first pivot arrangement and the bracket about said second pivot axis;
characterised in that the adjustable locking mechanism to lock the second pivot arrangement in any of a plurality of angular settings about the first pivot axis to enable adjustment of the direction of the carrier arm relative to the plough frame and in this way the ploughing furrow width when in a ploughing position.

The depth wheel therefore can be adjusted to any required angular setting about the first pivot axis (which will usually be substantially vertical during ploughing along level ground) i.e. to extend forwardly or rearwardly of the wheel mounting and generally parallel to the ploughing direction, and upon each reversal of the plough bodies the depth wheel allows this movement and, when the movement has been completed, the depth wheel will be in a suitable position to control the depth of ploughing in the new ploughing position.

Preferably, the rotation of the bracket about the second pivot axis is between two detent positions, corresponding one with each of the two ploughing positions, so that when the rotation of the plough frame has been completed, the carrier arm can extend generally perpendicularly downwardly of the bracket. Thus, on level ground, the plough frame and the bracket will each extend substantially horizontally, and the carrier arm can extend downwardly of the bracket in a substantially vertical plane. However, these positions are intermediate stop positions, and the bracket can be forced to rotate through these intermediate positions and indeed rotate through up to, or more than 360°.

The detent positions may be provided by means of a spring urged roller and a curved guide having diametrically opposed recesses in its periphery into which the roller can be seated, the roller moving relatively around the periphery of the guide from one recess to the other upon each reversal of the plough frame.

Conveniently, the carrier arm is mounted at its upper end on a substantially horizontal pivot extending generally perpendicular to the ploughing direction. A depth adjuster mechanism may be coupled with the upper end of the carrier arm and may be operated to adjust the angular setting of the arm about the pivot.

In a particularly preferred arrangement, a latching mechanism is provided to hold the carrier arm in any desired, adjusted depth wheel setting, when the wheel engages the ground, but which releases or unlatches itself upon lifting of the entire plough by the lifting arrangement of the propelling vehicle (tractor) e.g. as the tractor reaches the headland of a field being ploughed, and prior to reversal of the plough frame and return along a reverse pass along the field.

The depth wheel therefore hangs freely from the pivot of the carrier arm, after unlatching, and acts as a "pendulum wheel" as the plough frame rotates to the new ploughing position. However, upon subsequent lowering of the plough by the tractor in the new ploughing position, the wheel engages the ground and via the mounting of the carrier arm on the horizontal pivot effects forceable re-latching of the mechanism in the same depth setting as for the previous ploughing position.

The latching mechanism may comprise a socket carried by part of the first pivot arrangement, and a thrust element receivable by the socket, and preferably comprising a threaded adjuster screw. A friction coupling may be provided to hold the thrust element releasably in the socket.

The releasable locking mechanism which permits adjustment of the second pivot arrangement about the first pivot axis can be operated in order to adjust the carrier arm to extend either forwardly or rearwardly of the bracket and substantially parallel to the ploughing direction. In the event that the plough bodies of the plough frame are provided with means for adjusting the attitude of the plough bodies relative to the axis of the ploughing frame e.g. to vary the ploughing furrow width, the releasable locking mechanism may be operated so that the carrier arm of the depth wheel still extends generally parallel to the ploughing direction despite the adjustment of the plough bodies.

The locking mechanism may comprise a series of adjuster holes arranged along an arc about the first pivot axis, and a keeper hole, and a locking element which can be taken through any selected one of the adjuster holes and into the keeper hole to suit required angular setting of the depth wheel about the first pivot axis.

A particularly advantageous and further preferred aspect of the plough according to the invention comprises an arrangement whereby the depth wheel can function readily as a transport wheel when required.

It is known for the transport position of a reversible plough frame (which usually rotates through about 180° between right and left side ploughing positions) to comprise an approximately mid-position i.e. rotation through about 90°, so that each pair of plough bodies extend upwardly and outwardly in a V-shaped form from the plough frame, and with the plough frame extending generally parallel to the direction of travel, so that the plough frame and plough bodies present minimum overall width for transport through farm gateways and along public roads.

In the preferred embodiment, upon such rotation of the plough frame to the transport position (which is permitted by the relative rotation between the first and second pivot arrangements), the carrier arm extends downwardly of the bracket (which in turn extends downwardly of the plough frame), and the first pivot axis then extends substantially horizontally. To set any required transport height of the wheel, the locking mechanism can now be adjusted to vary the setting of the second pivot arrangement about the first pivot axis.

When the depth wheel has been adjusted to operate as a transport wheel, it can function as a "castor wheel", and relative sliding movement can take place between the roller and the curved guide, along the outer periphery of the guide between the two recesses, as the position of the transport wheel adjusts automatically to suit ground conditions and the forward movement of the tractor and plough.

The depth wheel can be mounted at any suitable position along the length of the plough frame, and which will usually be at or near to the rear end of the frame.

Embodiments of reversible plough according to the invention will now be described in detail, by way of example only, with reference to the accompanying drawings, in which:
Figure 1 is a plan view of a rear portion of a plough frame and reversible plough bodies provided with a depth wheel according to the invention;
Figure 2 is a detailed side view showing the mounting of the depth wheel on the plough frame via a transversely extending support bracket;
Figure 3 is a detailed side view of the rear end of the plough frame with the depth wheel mounted at the rear end of the plough frame and occupying a transport position;
Figure 4 is a detailed side view showing the depth wheel adjusted to a transport position, when the wheel is mounted on the plough frame at a position spaced forwardly of the rear end thereof;
Figure 5 is a detailed side view, to an enlarged scale, showing the manner by which a carrier arm for the depth wheel is mounted on the support bracket via first and second pivot arrangements;
Figure 6 is an end view of the second pivot arrangement to illustrate the relative rotation which takes place during reversal of the plough bodies;
Figure 7 is a plan view of the first and second pivot arrangements, and wheel carrier arm;
Figure 8 is a view, similar to Figure 5, of an alternative embodiment, and showing a modified way of mounting the carrier arm of the depth wheel on the support bracket; and,
Figure 9 is a view, similar to Figure 7, of the modified way of mounting the carrier arm.

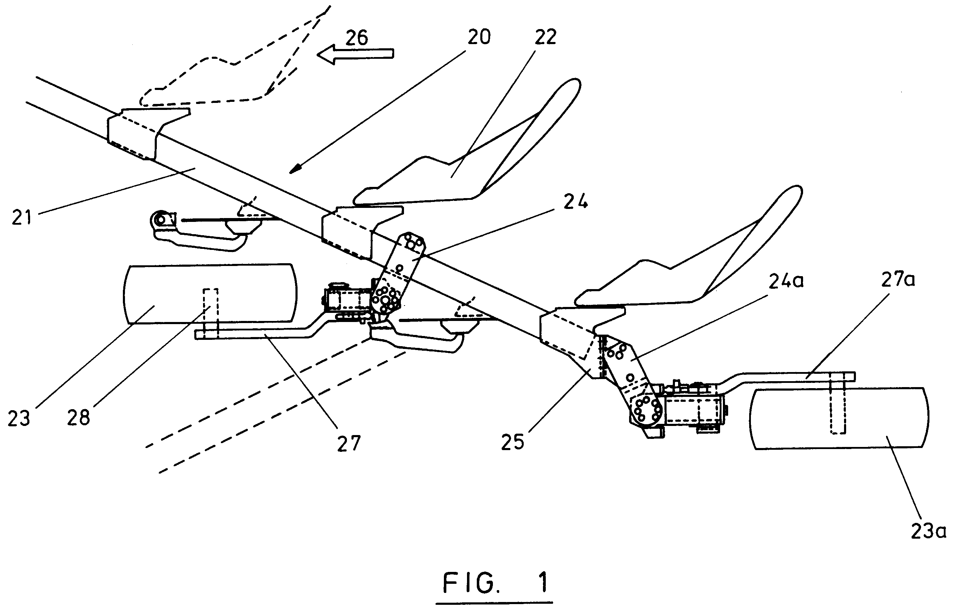

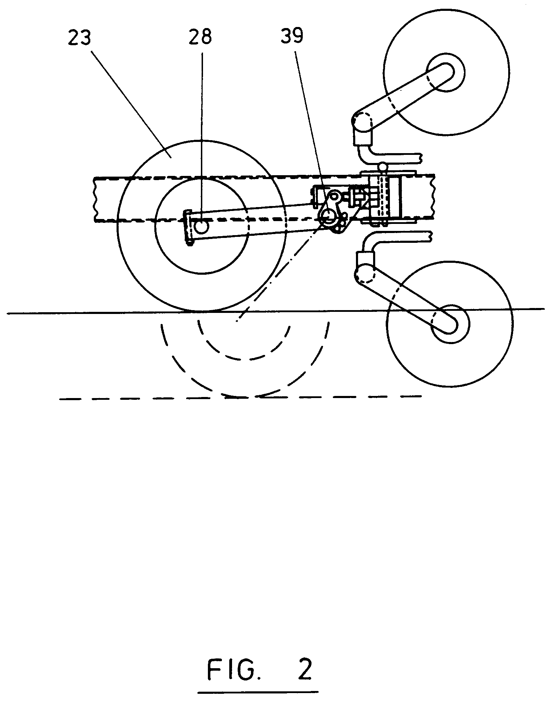

Referring now to Figures 1 to 7 of the drawings, there will be described a preferred embodiment of reversible plough according to the invention, although only the rear end of the plough is illustrated which embodies the invention. The reversible plough is preferably of the fully mounted type, and is provided with coupling means at its forward end (not shown) which can be of standard type for coupling the plough to a rear lifting arrangement of a propelling vehicle, which will usually be the three part hydraulic lift arrangement at the rear of an agricultural tractor.

The plough according to the invention is designated generally by reference 20, and comprises a pivotally mounted plough frame or "beam" 21 which carries pairs of plough bodies 22 which are arranged along the length of the frame, and means is provided (not shown) to rotate the plough frame 21 between a right side ploughing position shown in full lines in Figure 1, to a left side ploughing position shown in dashed outline. Upon such rotation of the plough frame 21, through approximately 180°, this brings one or the other of the plough bodies 22 of each pair into a ploughing position.

A depth control wheel 23 is mounted on the plough frame 21 via an arrangement to be described in more detail below, and which thereby controls the depth of ploughing by the plough bodies 22 in the right or left side ploughing positions.

Figure 1 shows a depth wheel 23 mounted in a forwardly extending position, and connected to the plough frame 21 via a transversely extending support bracket 24 which is rigidly secured to the plough frame 21 at a position spaced forwardly of the rear end 25 of the plough frame 21. Support bracket 24 is rotatable with the plough frame 21 during each reversal of the plough bodies.

Figure 1 also shows a depth wheel 23a mounted on the rear end 25 of the plough frame 21 via rigid mounting bracket 24a, and extending rearwardly as shown. The depth wheel 23 extends forwardly and parallel to the direction of ploughing 26, and is located approximately midway between the last two sets of plough bodies 22 on the plough frame 21. Depth wheel 23a extends rearwardly and parallel to direction 26, and a depth wheel can be mounted at either of the two locations indicated.

Depth wheel 23 is mounted at the lower end of a wheel carrier arm and is rotatable on a generally horizontal axle 28 which extends substantially perpendicular to the direction of ploughing 26. The carrier arm 27 is connected to support bracket 24 via first and second pivot arrangements (29, 36), which will be described in more detail below, and which permit the plough frame 21 to carry out rotational movement between its two ploughing positions, by virtue of relative rotation of the first pivot arrangement (29) and the bracket 24 about a second pivot axis (37) provided by the second pivot arrangement (36).

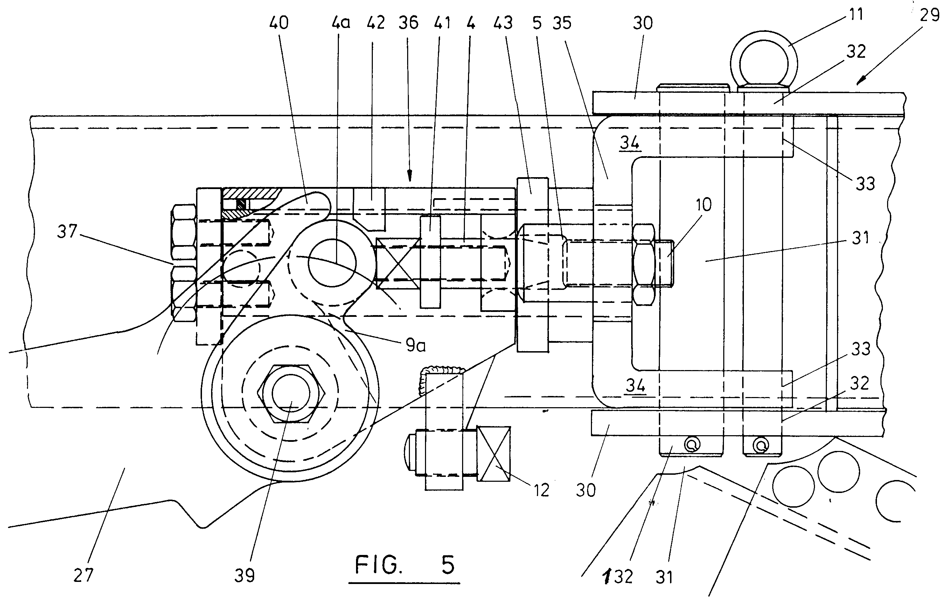

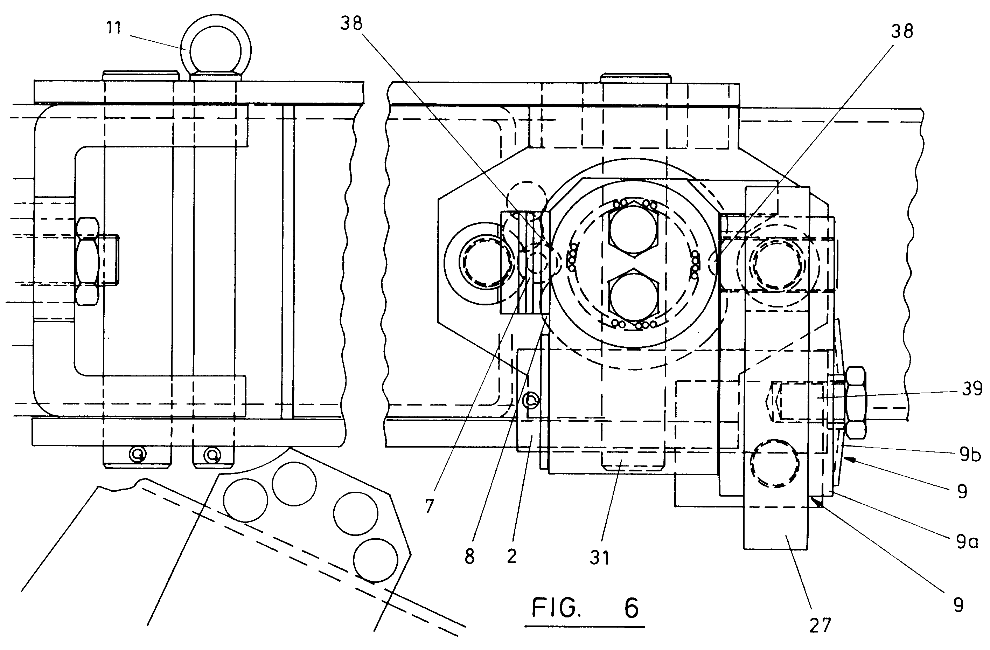

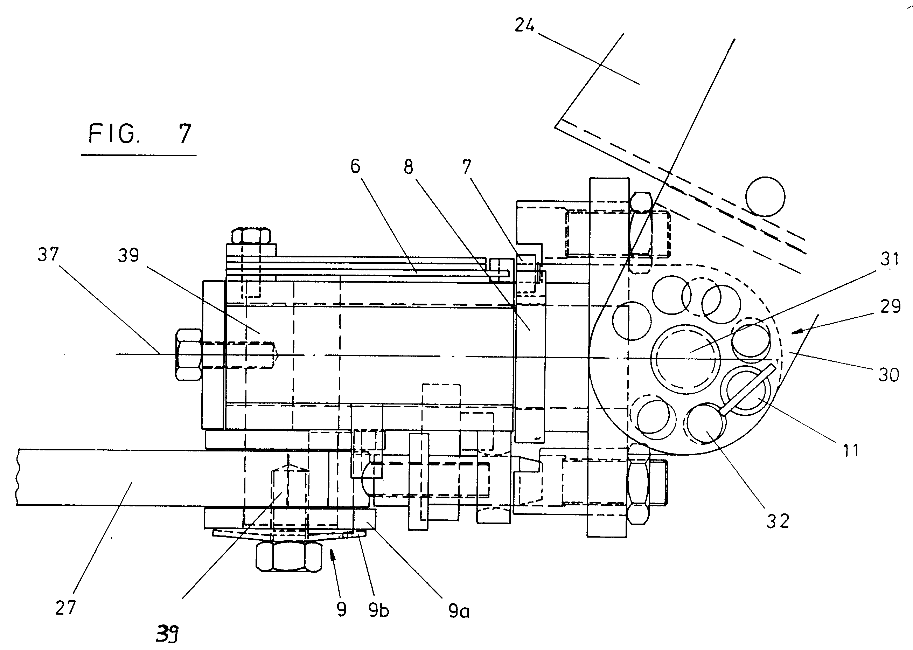

The first pivot arrangement is shown in more detail in the enlarged views of Figures 5 to 7, and is designated generally by reference 29. As can be seen in the plan view of Figure 7, pivot arrangement 29 is carried by projecting flanges 30 of bracket 24, and the pivot arrangement 29 defines a first pivot axis 31 which extends generally upright i.e. vertically on level ground, when the plough frame 21 is in either of its ploughing positions.

First pivot axis 31 is provided by means of a pivot pin 132 which is taken through the flanges 30 of bracket 24.

The carrier arm 27 and depth wheel 23 can be adjusted about the first pivot axis 31, so as to take up any required extension from mounting bracket 24, and when this has been settled e.g. directly forward or directly rearward as shown in Figure 1, this adjustment position is locked by means of a locking mechanism which, in the illustrated embodiment, comprises a removable locking pin 11. A series of adjuster holes 32 is formed in each of the flanges 30, and extend around the axis 31, and locking pin 11 can be taken through any selected one of the holes 32 and through a keeper hole 33 (Figure 5) formed in each of a pair of flanges 34 of a U-shaped coupling 35 by means of which the first pivot arrangement 29 is coupled with a second pivot arrangement designated generally by reference 36 (see Figure 5).

First pivot arrangement 29 provides a first (upright) pivot axis 31, in either ploughing position, whereas second pivot arrangement 36 defines a second pivot axis 37 which extends substantially perpendicular to pivot axis 31, and therefore extends substantially horizontally when the plough is travelling over level ground.

During rotation of the plough frame 21, which will normally take place after raising of the plough by the lifting arrangement of the tractor, this rotation will also be followed by the support bracket 24 (or 24a), and this is permitted by means of a rotational connection between second pivot arrangement 36 and first pivot arrangement 29. In the illustrated embodiment, this is provided by means of a curved guide 8 and a spring urged roller 7, guide 8 having two diametrically opposed recesses 38 (see Figure 6) in its outer periphery into which roller 7 can be spring-pressed, and which form two detent or stop positions. The roller 7 therefore can move relatively around the periphery of the guide 8 from one recess 38 to the other, upon each reversal of the plough frame. During movement of the plough along level ground, either of these recesses 38 will determine positions whereby the carrier arm 27 can extend in a substantially vertical plane. The spring urging of the roller 7 is provided by an arrangement of leaf springs 6. This is sufficiently powerful to hold the roller 7 in either recess, even when the plough is travelling along ground sloping up to 15° i.e. a 30° range of movement, before it becomes unseated. However, this spring-loading to the detent positions can be overcome, and roller 7 can be caused to rotate through 360°, or more, about the axis 37.

Returning now to description of the mounting of the wheel carrier arm 27, there is provided at its upper end a substantially horizontal pivot 39 which extends generally perpendicular to ploughing direction 26, and a depth adjuster mechanism is coupled with the upper end 40 of the carrier arm 27 and can be operated to adjust the angular setting of arm 27 about pivot 39, to vary the depth control setting of the wheel 23.

The depth adjusting mechanism is shown by reference 4, as shown in Figure 5, and is connected to carrier arm 27 via a friction coupling 9 comprising a friction plate 9a pressed by springs 9b (see Figure 6) against the side face of arm 27 near to pivot 39.

Adjusting mechanism 4 comprises an adjusting screw which is pivotally connected at 4a to friction plate 9a, and which carries a collar 41 movable between first and second stops 42 and 43 during each reversal of the plough bodies. Thus, when the plough frame is raised by the lifting hitch of the tractor, prior to reversal of the plough bodies, the carrier arm 27 and wheel 23 rotate under gravity action in a counterclockwise direction about pivot 39. However, the friction plate 9a also follows this rotation under its friction connection with arm 27, and this causes adjusting screw 4 to move to the left as seen in Figure 5, and thereby become withdrawn from seating 5. This movement of the screw 4 continues until collar 41 comes into engagement with first stop 42. However, the arm 27 and wheel 23 continue to rotate about pivot 39 which is permitted by sliding contact between friction plate 9a and arm 27, until the arm reaches its lowest equilibrium position.

When the plough is again lowered following reversal of the plough bodies, the wheel 23 re-engages the ground and arm 27 now rotates clockwise about pivot 39. This rotation is transferred as linear motion to the adjusting screw 4 via friction plate 9a, and screw 4 now moves to the right until it again engages seating 5 and collar 41 engages second stop 43. The arm 27 continues its rotation about pivot 39 until its upper end 40 re-engages with the end of adjusting screw 4 as shown in Figure 5.

The screw 4 and seating 5 therefore form a latch mechanism, in which the movable part (screw 4) moves between two stops, whereas the wheel carrier arm 27 can move freely away from the end of the screw 4 during each lifting of the plough frame.

The adjusting screw 4 therefore forms part of a latching mechanism to hold the carrier arm 27 in any desired depth wheel setting, when the wheel engages the ground, and can be forcibly entered into a socket provided by seating 5 upon lowering of the plough to bring depth wheel 23 into contact with the ground.

However, upon lifting of the plough by the lifting arrangements of the tractor, arm 27 can pivot downwardly from the depth control setting shown in Figure 5, in an anticlockwise direction, so that depth wheel 23 and arm 27 are suspended as a "pendulum wheel". The plough frame or "plough beam" therefore revolves over and above the depth wheel during reversal of the plough bodies.

The releasable locking mechanism which permits adjustment of the second pivot arrangement 36 about the first pivot axis 31 enables the carrier arm to be adjusted, to extend parallel to the ploughing direction 26, and in the event that the plough is provided with means for adjusting the attitude of the plough bodies 22 relative to the plough frame 21 to vary the ploughing furrow width, the pin 11 can be released and the necessary adjustment take place, and then the pin be reinserted in newly aligned holes, and the carrier wheel arm 27 can still extend generally parallel to the ploughing direction despite adjustment of the plough bodies 22 and therefore also of the inclination of the axis of plough frame 21 relative to the ploughing direction 26.

The wheel 23 and its mounting on the plough frame 21 have been described with reference to use of wheel 23 as a depth wheel.

However, in a particularly preferred development of the invention, the depth wheel 23 can be adjusted via its mounting in order to function as a transport wheel when required.

The transport position of a reversible plough is usually approximately mid-way between right and left side ploughing positions, following rotation of about 90° from either position, and in this arrangement each pair of plough bodies 22 extend upwardly and outwardly in a V-shaped form, and with the plough frame extending generally parallel to the direction of travel, the plough frame and plough bodies present minimum overall width for transport through farm gateways and along public roads.

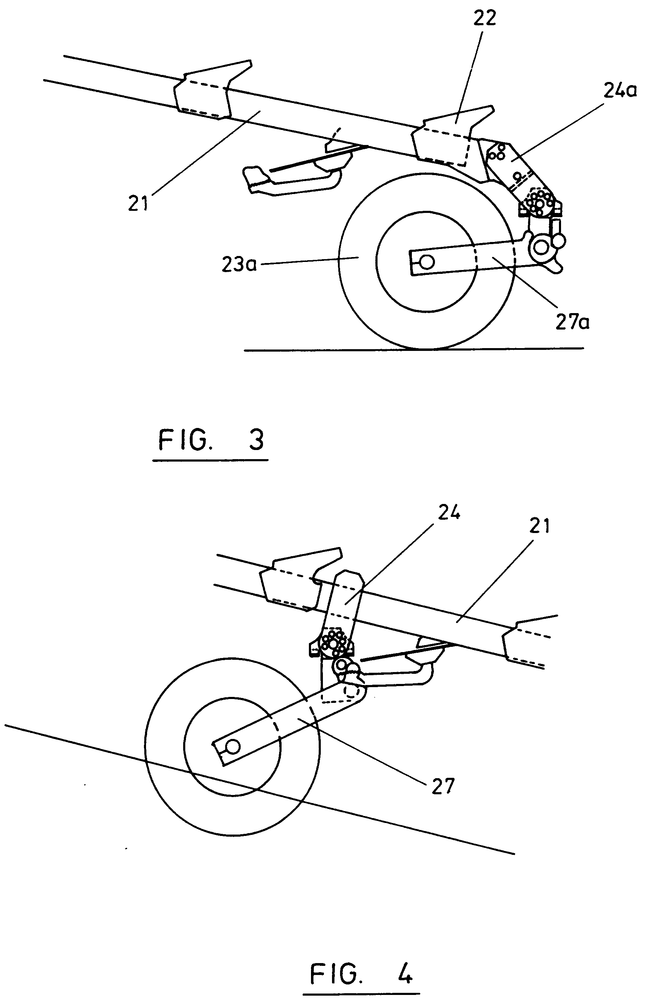

Figures 3 and 4 show plough frame 21 adjusted to the transport position, and this is permitted by means of the rotational connection between first pivot arrangement 29 and second pivot arrangement 36, which rotational connection effectively functions as a "wrist". Then, to set any required transport height of the wheel, which is now functioning as a transport wheel, locking pin 11 can be removed (which now extends substantially horizontally), and can be inserted in any aligned set of holes to suit the required transport height. Fine adjustment of the transport height will also be possible by operating adjuster screw 12. (In the transport position axis 37 will be approximately vertical when the plough is moving over level grounds).

The roller 7 which slides relatively along the curved surface of guide 8, will be located substantially mid-way between the recesses 38 (see Figure 6), and therefore the wheel can function as a "castor wheel", and can adjust itself automatically to suit ground conditions and the forward movement (or rearward movement) of the tractor and plough. (Of course, wheel 23 can rotate completely i.e. through more than 360° about axis 37 if required, with roller 7 moving along the entire periphery of guide 8).

The preferred embodiment of reversible plough with combined depth / transport wheel, described herein with reference to the drawings, therefore has the following general function and advantages as set out below.

The wheel can be mounted in both forwards and backwards directions, and function as a depth wheel and transport wheel.

The combined wheel can be used on ploughs with reversible plough bodies, and which project upwardly at the mid-position i.e. 90° rotation, for the transport position and in which it can be locked.

Common adjustment of the mounting of the wheel can be obtained for ploughing depth on right and left side ploughing, and a depth adjustment area of minimum 300 mm can be achieved. There is the possibility of adjusting the right and left side ploughing positions to be exactly alike, so that a single adjustment can be made to compensate for minor inaccuracies.

Adjustment of the wheel to be parallel to the plough bodies on ploughs with a variable ploughing width can be obtained, by removing locking pin 11, turning the unit to the desired position, and then reinserting the pin.

There is also possible adjustment of the wheel axis inclination and transport height in the transport position.

### GENERAL FUNCTIONAL DESCRIPTION

The depth wheel functions as a "pendulum wheel", which means that the main plough beam can revolve over and above the wheel during reversal.

The wheel has two main axes, namely one that is parallel with the direction of the plough bodies and with the ground (in the ploughing position), and one (28) for the wheel arm with which ploughing depths can be set. The adjusting screw (4) sets the ploughing depth and acts on the wheel arm.

The locking mechanism (latching mechanism comprising adjusting screw 4 acting as a thrust element and socket provided by seat 5 situated on the fixed part of the coupling 35), operates so that when the ground is contacted by the wheel and the wheel arm moves, adjusting screw 4 also moves as it is connected to friction coupling 9.

The spring system, comprising cantilever leaf springs 6, holds the wheel in the proper position after reversal of the plough bodies, and can maintain this up to 30° crosswise slope i.e. 15° slope in either direction. The cantilever leaf springs 6 press roller 7 on curved guide 8 which is shaped to give the required characteristic.

The depth adjusting mechanism (provided by adjuster screw 4) is connected to the wheel arm 27 via the friction coupling 9 which allows the wheel to be forced into the transport position. The transport position can be obtained by manual adjustment, but no adjustment for the wheel arm is required except for pre-adjustment of screw 12. The friction coupling 9 allows the wheel arm to move freely between its depth and transport positions without any manual action. On return from the transport position, and beginning with ground contact, the friction coupling first accomplishes locking function of the wheel, and then slips so that contact between the wheel arm and the adjusting screw is again attained, with the wheel now in the set depth position.

### DESCRIPTION OF PLOUGH BODY REVERSAL

1. The plough is lifted out of the ground by the lifting arrangement of the tractor, and the depth wheel 23 then hangs down freely after disengagement of the latching mechanism.
2. The plough beam is then reversed fully to the opposite position, and during this time the wheel hangs down as a "pendulum". The spring system keeps the wheel in the correct position prior to contact with the ground.
3. When lowering the plough back to the ground, the wheel contacts the ground and the latching mechanism reacts immediately via the mechanical coupling system with the wheel arm.
4. When lowering the plough further, the adjusting screw will, at the pre-set depth, contact both the wheel arm and the bottom of the seat 5 on the coupling and the wheel arm is now locked (the seat 5 contacted by the end of screw 4 also has an adjusting screw 10 for equalising possible offset between right and left hand ploughing positions).

### DESCRIPTION OF TRANSPORT POSITION

1. The plough is lifted out of the ground, and the depth wheel hangs down freely, and the latching mechanism is disengaged.
2. The locking pin 11 is removed, and the direction of the main axis of the wheel is moved to the desired position corresponding with the required transport position (which is taken up automatically when the plough beam is rotated to the mid-position), and the locking pin is then reinserted.
3. The plough beam is then turned to the mid position through rotation of about 90°, and is then locked in this position, which is the transport position. The depth wheel is now in a transport position.
4. If the height of the wheel is not satisfactory, this can be corrected by means of adjusting screw 12.

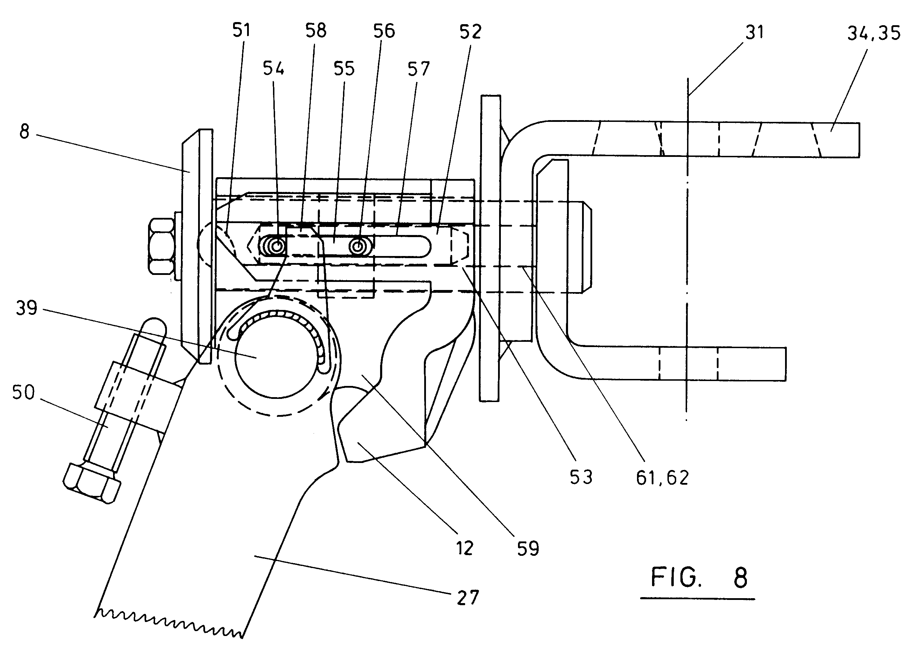

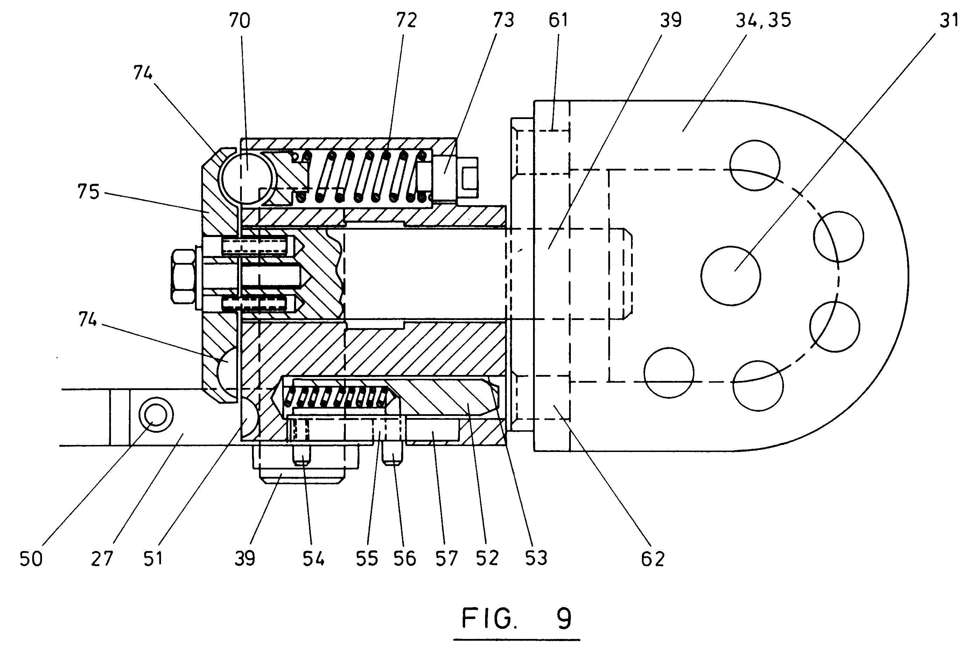

Figures 5 to 7 show in detail one preferred way of mounting the carrier arm 27 of the depth wheel 23 on the support bracket 24, and a further preferred embodiment is shown in Figures 8 and 9 and which will now be described in detail. Parts corresponding with those already described are designated by the same reference numerals, and will not be described in detail again.

Figures 8 and 9 therefore show an alternative way of mounting the wheel carrier arm 27 on the support bracket 24, and in particular show an alternative construction and operation of depth adjustment mechanism. Depth adjustment is achieved by means of an adjustment screw 50 mounted on the carrier arm 27 and engageable, in the raised position of the depth wheel 23, in a recess 51 of housing 59. A locking pin is slidably mounted in a bore 53 in the housing 59, and carries a slider 55 which is secured to the pin 52 by means of a screw 56. The slider 55 is movable within a slit 57 also formed in the housing, and a compression spring 60 within the bore 53 urges the locking pin 52 to the right as seen in Figure 9.

A peg 54 is fastened to the slider 55, and the arrangement is such that the pin 52 / slider 55 / peg 54 are movable by an actuator formed by an upper clawed end 58 of the wheel carrier arm 27 as the latter pivots (upwardly or downwardly) about pivot 39. Figure 8 shows the assembly in a lifted position of the plough, in which the wheel 23 and wheel arm 27 hang more or less downwardly of the pivot 39 under gravity, and the upper end 58 of the arm 27 has moved the pin 52 to the left as shown in Figure 8 to one end position, and thereby unlocks the coupling together of housing 59 to coupling 34, 35, whereby the housing 59 can rotate about the pivot 39.

The spring 60 urges the pin 52 to the right within the bore 53, and therefore when the plough is lowered and brings the wheel 23 into contact with the ground, the upper end 58 of the arm 27 moves to the right and thereby allows the pin 52 to be pushed to the right under the action of the spring 60 into one or the other of a pair of diametrically opposed holes 61 or 62 in the coupling 35 when a respective one of these holes is aligned with the bore 53. The particular hole 61 or 62 which is aligned with the bore 53 will depend on whether the plough frame 21 has been adjusted to left side or right side ploughing. When the locking pin 52 is allowed to move to the right as shown in Figures 8 and 9 by the upper end 58 of the wheel carrier arm 27, it then locks housing 59 to the coupling 34.

Therefore, this further embodiment shown in Figures 8 and 9 provides an alternative to the use of the adjustable collar 41 and friction coupling 9 of the previous embodiment. Adjustment screw 50 replaces the adjustable collar 41, and the actuation of the locking pin is no longer via the friction coupling 9, but by engagement between the upper end 58 of wheel carrier arm 27 and the peg 54 projecting laterally from the slider 55. The peg 54 moves along the slit 57, although this slit will be covered by a thin slider plate to prevent it from being filled with soil. When the plough is lifted from the ground, the depth control wheel 23 moves downwardly, and by this movement the hooked upper end 58 on the wheel carrier arm 27 catches the peg 54 and thereby moves the locking pin 52 out of the respective one of the holes 61 or 62 so that the locking of housing 59 to the coupling 34 is released. When the plough is lowered again, the depth control wheel 23 again engages the ground and arm 27 again pivots upwardly about pivot 27 whereby the locking pin 52 is then spring urged back into the aligned hole in the coupling 34 to lock the system again.

A further variation of the embodiment shown in Figures 5 to 7 comprises an alternative detent system to the spring urged roller 7 and guide 8 of Figures 5 to 7. The previously described function of roller 7 and guide 8 is now carried out by a spring-urged ball 70 urged to the left as shown in Figure 9 under the action of compression spring 72 via a holder 71 positioned between the spring 72 and the ball 70. The right hand end of a bore in which the compression spring 72 is housed is closed by a cap 73, and ball 70 is pressed to the left under the action of the spring 72 via the holder 71 so that it is capable of snap-fitting into either one of a pair of diametrically opposed recesses 74 in a fixed end plate 75 secured to pivot 39.

The latching of ball 70 in either one of the recesses 74 is technically equivalent to the spring pressing of roller 7 into either one of the two diametrically opposed recesses 38 in the periphery of guide 8 of the previously described embodiment.

## Claims

1. A reversible plough (20) having coupling means at its forward end for coupling the plough to a rear lifting arrangement of a propelling vehicle, a pivotally mounted plough frame (21) carrying pairs of plough bodies (22) arranged along the length of the frame, means for rotating the plough frame (21) relative to the forward coupling means between right side and left side ploughing positions so as to bring one or the other of the plough bodies of each pair into a ploughing position, and a depth control wheel (23) mounted on the plough frame (21) via a wheel mounting and arranged to control the depth of ploughing by the plough bodies in the right or the left side ploughing positions;
wherein the wheel mounting comprises:
a rigid mounting bracket (24) secured to the plough frame (21) and extending transversely of the frame, said bracket being rotatable with the plough frame during reversal of the plough bodies (22);
a first pivot arrangement (29) carried by the bracket (24) and defining a first pivot axis (31) which extends generally upright in either ploughing position;
a second pivot arrangement (36) connected to the first pivot arrangement (29) and defining a second pivot axis (37) extending substantially perpendicular to the first pivot axis (31);
an adjustable locking mechanism (11, 32, 33) to lock the second pivot arrangement (36) about the first pivot axis (31); and,
a wheel carrier arm (27) connected at one end to the second pivot arrangement (36) and rotatably mounting the depth wheel (23) at or near the opposite end of the arm (27);
whereby upon each rotational plough reversal movement of the plough frame (21), the depth wheel (23) allows this movement by relative rotation of the first pivot arrangement (29) and the bracket (24) about said second pivot axis (37).
characterised in that the adjustable locking mechanism (11, 32, 33) is arranged to lock the second pivot arrangement (36) in any of a plurality of angular settings about the first pivot axis (31) to enable adjustment of the direction of the carrier arm (27) relative to the plough frame (21) and in this way the ploughing furrow width when in a ploughing position.

2. A plough according to Claim 1, in which the rotation of the bracket (24) about the second pivot axis (37) has two detent positions (38), corresponding one with each of the two ploughing positions, so that when the rotation of the plough frame (21) has been completed, the carrier arm (27) can extend generally perpendicularly downwardly of the bracket (24).

3. A plough according to Claim 2, in which the detent positions of the bracket (24) are provided by means of a spring urged roller (7) and a curved guide (8) having diametrically opposed recesses (38) in its periphery into which the roller (7) can be seated, the roller (7) moving relatively around the periphery of the guide (8) from one recess (38) to the other upon each reversal of the plough frame.

4. A plough according to any one of Claims 1 to 3, in which the carrier arm (27) is mounted at its upper end on a substantially horizontal pivot (39) extending generally perpendicular to the ploughing direction (26).

5. A plough according to Claim 4, in which a depth adjuster mechanism (4) is coupled with the upper end (40) of the carrier arm (27) and is operable to adjust the angular setting of the arm (27) about the pivot (39).

6. A plough according to Claim 4 or 5, in which a latching mechanism (4, 5, 9) is provided to hold the carrier arm (27) in any desired adjusted depth wheel setting, when the wheel (23) engages the ground, but which releases or unlatches itself upon lifting of the entire plough by the lifting arrangement of the propelling vehicle.

7. A plough according to Claim 6, in which the latching mechanism comprises a socket (5) carried by a coupling part (35) of the first pivot arrangement (29), and a thrust element (4) receivable by the socket (5).

8. A plough according to Claim 7, in which a friction coupling (9) is provided to allow the carrier arm (27) to move between depth and transport positions and to initiate locking of the thrust element (4) to the socket (5) whenever the wheel (23) engages the ground again after reversal of the plough bodies.

9. A plough according to any one of Claims 1 to 8, in which the plough bodies (2) are adjustable on the ploughing frame (21) in order to vary the ploughing furrow widths, and the locking mechanism (11, 32, 33) is operable to adjust the direction of extension of the carrier arm (27) for any adjustment of the plough bodies.

10. A plough according to any one of Claims 1 to 9, in which the locking mechanism comprises a series of adjuster holes (32) arranged along an arc about the first pivot axis (31), and a keeper hole (33) and a locking element (11) which can be taken through any selected one of the adjuster holes (32) and into the keeper hole (33) to suit any required angular setting of the depth wheel (23) about the first pivot axis (31).

11. A plough according to any one of Claims 1 to 10, in which the mounting of the depth wheel (23) on the plough frame (21) is such as to enable the depth wheel to be adjusted to operate as a transport wheel.

12. A plough according to Claim 11 when appendant to Claim 3, in which the wheel can function as a castor wheel when the frame (21) is adjusted to the transport position, whereby relative sliding movement can take place between the roller (7) and the curved guide (8), to permit the transport wheel to adjust itself automatically.

13. A plough according to any one of the preceding Claims, in which the depth wheel (23) can be mounted at the rear (25) of the plough frame (21), to extend rearwardly therefrom, or can be mounted at a position spaced forwardly of the rear end (25), and to extend forwardly therefrom.

14. A plough according to Claim 6, in which the latching mechanism comprises a locking pin (52) biased by spring (60) to a latching position in one of a pair of receiving holes (61, 62) in a coupling (34) connected to the support bracket (24), and in which the wheel carrier arm (27) has an actuator (58) engageable with a slider (55) connected to the locking pin (52) in order to release the locking pin (52) upon lifting of the entire plough and under downward movement of the wheel (23) and carrier arm (27) under gravity.

15. A plough according to Claim 14, in which a peg (54) projects laterally from the slider (55) to be in the path of travel of the actuator (58) of the carrier arm (27).

16. A plough according to Claim 2, in which the detent positions of the bracket (24) are provided by means of a spring urged ball (70) receivable by either one of a pair of diametrically opposed recesses (74) of a fixed end plate (75), with each recess (74) serving to define a respective one of two captive positions for the depth control wheel (23) corresponding to a respective one of the two plough reversal positions of the plough frame (21).

## Patentansprüche

1. Drehpflug (20), welcher aufweist: eine Kupplungseinrichtung an seinem vorderen Ende, mit welcher der Pflug mit einer hinteren Hebeanordnung eines Zugfahrzeugs verbunden werden kann, ein schwenkbar befestigtes Pfluggestell (21), welches Pflügekörperpaare (22) trägt, welche entlang des Gestells angeordnet sind, Mittel zum Drehen des Pfluggestells (21) gegenüber der vorderen Kupplungseinrichtung zwischen einer rechtsseitigen und einer linksseitigen Pflügestellung, so daß jeweils entweder der eine oder der andere Pflügekörper eines jeden Paares in Pflügestellung gebracht wird, und ein Tiefen-Steuerrad (23), welches am Pfluggestell (21) über eine Radbefestigung befestigt ist und welches dazu dient, die Tiefe des Pflügens der Pflügekörper in der rechtsseitigen oder linksseitigen Pflügestellung zu steuern;
wobei die Radbefestigung umfaßt:
einen starren Befestigungsträger (24), welcher an dem Pfluggestell (21) befestigt ist und welcher sich quer zum Gestell erstreckt, wobei der Träger mit dem Pfluggestell während des Umdrehens der Pflügekörper (22) drehbar ist;
eine erste Schwenkanordnung (29), welche von dem Träger (24) getragen ist und welche eine erste Schwenkachse (31) bildet, welche sich insgesamt senkrecht in beiden Pflügestellungen erstreckt;
eine zweite Schwenkanordnung (36), welche mit der ersten Schwenkanordnung (29) verbunden ist und welche eine zweite Schwenkachse (37) bildet, welche sich im wesentlichen senkrecht zur ersten Schwenkachse (31) erstreckt;
einen einstellbaren Sperrmechanismus (11, 32, 33), mit welchem die zweite Schwenkanordnung (36) gegen die erste Schwenkachse (31) gesperrt werden kann; und
einen Radtragarm (27), welcher mit einem Ende an der zweiten Schwenkanordnung (36) befestigt ist und welcher das Tiefenrad (23) am entgegengesetzten Ende oder in der Nähe des entgegengesetzten Endes des Arms (27) drehbar befestigt;
wobei bei jeder Drehbewegung des Pfluggestells (21) das Tiefenrad (23) diese Bewegung durch eine Relativdrehung der ersten Schwenkanordnung (29) und des Trägers (24) um die zweite Schwenkachse (37) ermöglicht;
dadurch gekennzeichnet, daß
der einstellbare Sperrmechanismus (11, 32, 33) so eingerichtet ist, daß er die zweite Schwenkanordnung (36) in jeder von einer Mehrzahl von Winkellagen um die erste Schwenkachse (31) sperren kann, wodurch eine Einstellung der Ausrichtung des Tragarms (27) relativ zum Pfluggestell (21) und hierdurch der Furchenbreite beim Pflügen ermöglicht wird, wenn sich das Pfluggestell in Pflügestellung befindet.

2. Pflug nach Anspruch 1, bei dem die Drehbewegung des Trägers (24) um die zweite Schwenkachse (37) zwei Sperrpositionen (38) aufweist, welche jeweils einer der beiden Pflügestellungen entsprechen, so daß sich nach Beendigung der Drehung des Pfluggestells (21) der Tragarm (27) vom Träger (24) insgesamt senkrecht nach unten erstrecken kann.

3. Pflug nach Anspruch 2, bei dem die Sperrpositionen des Trägers (24) durch eine federbelastete Rolle (7) und eine gekrümmte Führung (8), welche diametral gegenüberliegende Ausnehmungen (38) auf ihrem Umfang aufweist, in welche die Rolle (7) einsitzen kann, gebildet sind, wobei die Rolle (7) bei jedem Umdrehen des Pfluggestells eine Relativbewegung um den Umfang der Führung (8) von einer Ausnehmung (38) zur anderen durchführt.

4. Pflug nach einem der Ansprüche 1 bis 3, dadurch gekennzeichnet, daß der Tragarm (27) mit seinem oberen Ende an einem im wesentlichen horizontalen Drehzapfen (39) befestigt ist, der sich insgesamt senkrecht zur Pflügerichtung (26) erstreckt.

5. Pflug nach Anspruch 4, bei dem ein Tiefen-Einstellmechanismus (4) mit dem oberen Ende (40) des Tragarms (27) gekoppelt ist und so betätigt werden kann, daß die Winkellage des Arms (27) um den Drehzapfen (39) eingestellt wird.

6. Pflug nach einem der Ansprüche 4 oder 5, bei dem ein Schnappmechanismus (4, 5, 9) vorgesehen ist, welcher den Tragarm (27) in jeder gewünschten eingestellten Lage des Tiefenrades hält, wenn das Rad (23) den Boden berührt, welcher jedoch losläßt oder sich ausklinkt, sobald der gesamte Pflug von der Hebeanordnung des Zugfahrzeugs angehoben wird.

7. Pflug nach Anspruch 6, bei dem der Schnappmechanismus eine Buchse (5) umfaßt, welche von einem Kupplungsteil (35) der ersten Schwenkanordnung (29) gehalten wird, sowie ein von der Buchse (5) aufnehmbares Druckelement (4).

8. Pflug nach Anspruch 7, bei dem eine Rutschkupplung (9) vorgesehen ist, welche es dem Tragarm (27) ermöglicht, sich zwischen einer tiefen und einer Transportstellung zu bewegen und ein Versperren des Druckelements (4) mit der Buchse (5) zu veranlassen, wenn das Rad (23) nach einem Umdrehen der Pflügekörper wieder den Boden berührt.

9. Pflug nach einem der Ansprüche 1 bis 8, bei dem die Pflügekörper (2) am Pfluggestell (21) einstellbar sind, um die Furchenbreiten beim Pflügen zu variieren, und bei dem der Sperrmechanismus (11, 32, 33) so betätigt werden kann, daß die Ausrichtung der Erstreckung des Tragarms (27) für alle Einstellungen der Pflügekörper angepaßt werden kann.

10. Pflug nach einem der Ansprüche 1 bis 9, bei dem der Sperrmechanismus eine Reihe von Einstell-Löchern (32), welche entlang eines Kreisbogens um die erste Schwenkachse (31) angeordnet sind, und ein Halteloch (33) und ein Sperrelement (11) aufweist, welches durch ein beliebiges ausgewähltes Einstell-Loch (32) hindurch in das Halteloch (33) eingeführt werden kann, wodurch jedweder geforderten Winkellage des Tiefenrades (23) um die erste Schwenkachse (31) entsprochen werden kann.

11. Pflug nach einem der Ansprüche 1 bis 10, bei dem die Befestigung des Tiefenrades (23) am Pfluggestell (21) es ermöglicht, das Tiefenrad so einzustellen, daß es als Transportrad arbeiten kann.

12. Pflug nach Anspruch 11 in Verbindung mit Anspruch 3, bei dem das Rad als Nachlaufrad arbeiten kann, wenn das Gestell (21) in Transportstellung ist, wobei zwischen der Rolle (7) und der gekrümmten Führung (8) eine relative Gleitbewegung stattfinden kann, damit das Transportrad sich automatisch selbst anpassen kann.

13. Pflug nach einem der vorhergehenden Ansprüche, bei dem das Tiefenrad (23) am hinteren Ende (25) des Pfluggestells (21) befestigt werden kann und sich von dort nach hinten erstreckt, oder bei dem es an einer vom hinteren Ende (25) nach vorn beabstandeten Stelle befestigt werden kann, und sich von dort nach vorne erstreckt.

14. Pflug nach Anspruch 6, bei dem der Sperrmechanismus einen Sperrbolzen (52) umfaßt, welcher von einer Feder (60) in eine Sperrposition in einem von zwei Aufnahmelöchern (61, 62) in einer mit dem Stützträger (24) verbundenen Kupplung (34) gedrückt wird, und bei dem der Radtragarm (27) ein Betätigungselement (58) aufweist, welches in Eingriff mit einem Schieber (55), welcher mit dem Sperrbolzen (52) verbunden ist, gebracht werden kann, um den Sperrbolzen (52) freizugeben, wenn der gesamte Pflug angehoben wird und bei einer nach unten gerichteten Bewegung des Rades (23) und des Tragarms (27) unter Schwerkra£teinwirkung.

15. Pflug nach Anspruch 14, bei dem ein Stift (54) vom Schieber (55) seitlich absteht, so daß er sich im Bewegungsweg des Betätigungselements (58) des Tragarms (27) befindet.

16. Pflug nach Anspruch 2, bei dem die Sperrstellungen des Trägers (24) durch eine federbelastete Kugel (70) gebildet werden, welche jeweils von einer von zwei diametral gegenüberliegenden Ausnehmungen (74) in einer festen Endplatte (75) aufnehmbar ist, wobei jede Ausnehmung (74) dazu dient, jeweils eine von zwei Sperrpositionen für das Tiefensteuerrad (23) zu bilden, welche jeweils einer von zwei Pflug-Umdrehstellungen des Pfluggestells (21) entsprechen.

## Revendications

1. Charrue réversible (20) ayant des moyens d'accouplement à son extrémité avant destinés à accoupler la charrue à un agencement de levage arrière d'un véhicule de propulsion, un châssis de charrue (21) monté de manière pivotante portant des paires de corps de charrue (22) agencés le long du châssis, des moyens destinés à faire tourner le châssis de charrue (21) par rapport aux moyens d'accouplement avant entre des positions de labourage du côté droit et du côté gauche afin d'amener l'un ou l'autre des corps de charrue de chaque paire dans une position de labourage, et une roue de jauge de profondeur (23) montée sur le châssis de charrue (21) par l'intermédiaire d'un montage de roue et agencée pour jauger la profondeur du labourage par les corps de charrue dans les positions de labourage du côté droit ou du côté gauche ;
dans laquelle le montage de roue comprend :
une console (24) de montage rigide (24) fixée au châssis de charrue (21) et s'étendant transversalement par rapport au châssis, ladite console pouvant tourner avec le châssis de charrue pendant l'inversion des corps de charrue (22) ;
un premier agencement de pivot (29) supporté par la console (24) et définissant un premier axe de pivot (31) qui s'étend généralement vers le haut dans l'une ou l'autre des positions de labourage :
un second agencement de pivot (36) relié au premier agencement de pivot (29) et définissant un second axe de pivot (37) s'étendant perpendiculairement au premier axe de pivot (31) ;
un mécanisme de verrouillage ajustable (11, 32, 33) destiné à verrouiller le second agencement de pivot (36) autour du premier axe de pivot (31) ; et,
un arbre de support de roue (27) relié à une extrémité ou second agencement de pivot (36) et monté de manière rotative sur la roue de jauge (23) à ou près de l'extrémité opposée du bras (27) ;
moyennant quoi à chaque mouvement inverse de labourage rotatif du châssis de charrue (21), la roue de jauge (23) permet ce mouvement par rotation relative du premier agencement de pivot (29) et de la console (24) autour dudit second axe de pivot (37),
caractérisée en ce que le mécanisme de verrouillage ajustable (11, 32, 33) est agencé pour verrouiller le second agencement de pivot (36) dans n'importe quelle position angulaire parmi une pluralité de celles-ci autour du premier axe de pivot (31) pour permettre le réglage de la direction du bras de support (27) par rapport ou châssis de charrue (21) et de cette manière, la largeur de sillon de labourage lorsqu'il est en position de labourage.

2. Charrue selon la revendication 1, dans laquelle la rotation de la console (24) autour du second axe de pivot (37) à deux positions de détente (38), correspondant avec l'une des deux positions de labourage, de telle sorte que, lorsque la rotation du châssis de charrue (21) est effectuée, le bras de support (27) petit s'étendre généralement perpendiculairement vers le bas de la console (24).

3. Charrue selon la revendication 2, dans laquelle les positions de détente de la console (24) sont prévues au moyen d'un galet (7) pressé par un ressort et d'un guide incurvé (8) ayant des creux (38) diamétralement opposés à sa périphérie dans lesquels le galet (7) peut être logé, le galet (7) se déplaçant de manière relative à la périphérie du guide (8) d'un creux (38) à l'autre à chaque inversion du châssis de charrue.

4. Charrue selon l'une quelconque des revendications 1 à 3, dans laquelle le bras de support (27) est monté à son extrémité supérieure sur un pivot (39) sensiblement horizontal s'étendant généralement perpendiculairement à la direction de labourage (26).

5. Charrue selon la revendication 4, dans laquelle un mécanisme (4) de réglage de la profondeur est accouplé à l'extrémité supérieure (40) du bras de support (27) et fonctionne pour régler la position angulaire du bras (27) autour du pivot (39).

6. Charrue selon la revendication 4 ou 5, dans laquelle un mécanisme de verrouillage (4, 5, 9) est prévu pour maintenir le bras de support ((27) dans n'importe quelle position de roue de jauge réglée souhaitée, lorsque la roue (23) se met en prise avec le sol, mais qui se libère ou se déverrouille par soulèvement de la charrue entière au moyen de l'agencement de levage du véhicule de propulsion.

7. Charrue selon la revendication 6, dans laquelle le mécanisme de verrouillage comprend une douille (5) supportée pur une partie d'accouplement (35) du premier agencement de pivot (29), et un élément poussoir (4) pouvant être reçu par la douille (5).

8. Charrue selon la revendication 7, dans laquelle un manchon à friction (9) est prévu pour permettre au bras de support (27) de se déplacer entre les positions de jauge et de transport et pour provoquer le verrouillage de l'élément poussoir (4) sur la douille (5) à chaque fois que la roue (23) se met en prise avec le sol de nouveau après inversion des corps de charrue.

9. Charrue selon l'une quelconque des revendications 1 à 8, dans laquelle les corps de charrue (2) sont réglables sur le châssis de charrue (21) afin de modifier la largeur des sillons de labrourage, et le mécanisme de verrouillage (11, 32, 33) peut fonctionner pour régler la direction d'extension du bras de support (27) pour tout réglage des corps de charrue.

10. Charrue selon l'une quelconque des revendications 1 à 9, dans laquelle le mécanisme de verrouillage comprend une série de trous d'ajustement (32) agencés le long d'un arc autour du premier axe de pivot (31), et un trou de contre-écrou (33) et un élément de verrouillage (11), qui peut être pris au moyen de n'importe quel trou d'ajustement sélectionné (32) et dans le trou de contre-écrou (33) pour s'adapter à n'importe quelle position angulaire de la roue de jauge (23) autour du premier axe de pivot (31).

11. Charrue selon l'une quelconque des revendications 1 à 10, dans laquelle le montage de la roue de jauge (23) sur le châssis de charrue (21) est tel qu'il permet à la roue de jauge d'être ajustée pour fonctionner comme roue de transport.

12. Charrue selon la revendication 11 lorsqu'elle dépend de la revendication 3, dans laquelle la roue peut fonctionner comme une roue pivotante lorsque le châssis (21) est réglé dans la position de transport, un mouvement coulissant relatif pouvant se produire entre le galet (7) et le guide incurvé (8), pour permettre à la roue de transport de se régler automatiquement.

13. Charrue selon l'une quelconque des revendications précédentes, dans laquelle la roue de jauge (23) peut être montée à l'arrière (25) du châssis de charrue (21), pour s'étendre vers l'arrière depuis celui-ci, ou peut être montée dans une position espacée vers l'avant de l'extrémité arrière (25), et pour s'étendre vers l'avant depuis celle-ci.

14. Charrue selon la revendication 6, dans laquelle le mécanisme de verrouillage comprend une broche de verrouillage (52) pressée par un ressort (60) jusque dans une position de verrouillage dans un des trous de réception (61, 62) allant par paire dans un accouplement (34) relié à la console de support (24), et dans laquelle le bras de support de roue (27) a un actionneur (58) pouvant se mettre en prise avec un coulisseau (55) relié à la broche de verrouillage (52) afin de libérer la broche de verrouillage (52) par soulèvement de la charrue entière et par un mouvement vers le bas de la roue (23) et du bras de support (27) sous l'effet de la gravité.

15. Charrue selon la revendication 14, dans laquelle une cheville (54) fait saillie latéralement depuis le coulisseau (55) pour être dans la trajectoire de course de l'actionneur (58) du bras de support (27).

16. Charrue selon la revendication 2, dans laquelle les positions de détente de la console (24) sont prévues au moyen d'une bille (70) pressée par un ressort pouvant être reçue par n'importe quel creux parmi deux creux (74) diamétralement opposés d'une plaque d'extrémité fixe (75), avec chaque creux (74) servant à définir une position respective parmi deux positions fixes pour la roue de contrôle de profondeur (23) correspondant à une position respective parmi deux positions inverses de labourage du châssis de charrue (21).
